# FASCICULE DE BREVET EUROPEEN

(11) **EP 2 082 822 B1**
(45) Date de publication et mention de la délivrance du brevet: **22.12.2010**
(21) Numéro de dépôt: 08173014.5
(22) Date de dépôt: 29.12.2008
(51) Int. Cl.: B23C 5/10

(54) **Fraise de surfaçage et de détourage pour l'usinage à grande vitesse de pièces en matériau composite**
Fräse zum Plan- und Profilfräsen für die Hochgeschwindigkeitsbearbeitung von Werkstücken aus Verbundwerkstoff
Milling cutter for face- and profile milling for high-speed machining of parts made from a composite material

(30) Priorité: 23.01.2008 FR 0800335
(43) Date de publication de la demande: 29.07.2009
(73) Titulaire: SNECMA, 75015 Paris (FR)
(72) Inventeur: Turrini, Claude Roger Robert, 91610 Ballancourt (FR)
(74) Mandataire: Ramey, Daniel

(56) Documents cités:
- EP-A- 1 348 508
- WO-A-2005/122690
- DE-A1- 10 232 037
- US-A1- 2007 231 087
- MITSUBISHI MATERIALS CORP.: "General catalogue 2007-2009" septembre 2007 (2007-09), MITSUBISHI , XP002494573 * page B094 * * page B128 - page B129 * * page B225 * * page B232 * * page B250 *

## Description

La présente invention concerne une fraise de surfaçage et de détourage selon le préambule de la revendication 1, en particulier pour l'usinage à grande vitesse de pièces en matériau composite telles par exemple qu'un carter de soufflante d'une turbomachine d'avion. Un exemple d'une telle fraise de surfaçage et de détourage est décrit dans le document EP 1 348 508 A1.

Le carter de soufflante d'une turbomachine a une forme générale cylindrique dont le diamètre peut être de l'ordre de 2 mètres environ. Ce carter peut être réalisé en matériau composite à base de fibres de carbone noyées dans une matrice en résine époxy. Le carter comprend à ses extrémités des brides annulaires de fixation qui doivent être usinées par surfaçage et/ou détourage pour supprimer tout défaut éventuel tel que des bavures sur ces brides.

Il est impératif que l'outil d'usinage de ces brides soit adapté pour couper les fibres du matériau composite et non pas les arracher, ce qui risquerait d'endommager le matériau composite du carter par délaminage.

Dans la technique actuelle, on utilise en général une fraise monobloc réalisée en carbure avec ou sans revêtement à base de diamant pour usiner les brides du carter de soufflante. Cependant, ce type de fraise fonctionne à des vitesses de coupe périphérique relativement faibles comprises entre 20 et 60m/min, ce qui se traduit par un temps d'usinage du carter relativement long.

Une solution à ce problème consisterait à augmenter la vitesse de coupe périphérique. Toutefois, le matériau de cette fraise n'est pas adapté pour fonctionner à des vitesses de coupe élevées, et l'usinage à grande vitesse générerait donc des températures importantes qui se traduiraient par une usure rapide de la fraise. Il serait alors nécessaire d'utiliser plusieurs fraises pour usiner tout le pourtour des brides du carter, ce qui augmenterait considérablement le risque d'endommagement de ces brides à chaque reprise de l'opération d'usinage par une fraise neuve.

On a déjà proposé de réaliser au moins partiellement ce type de fraise en céramique de façon à augmenter la résistance thermique de la fraise pour usiner à grande vitesse. Cependant, une fraise en céramique présente une résistance plus faible à la torsion et à la compression qu'une fraise en carbure. La géométrie d'une fraise en céramique est de plus en général adaptée pour un seul type d'usinage, par exemple le surfaçage. Lorsqu'elle est utilisée pour réaliser un usinage par détourage, cet usinage génère des températures importantes qui sont dommageables à la fraise et à la pièce usinée et pénalisantes pour l'usinage. Par ailleurs, les fraises en céramique ne sont pas toujours adaptées pour usiner des pièces en matériau composite.

De plus, les fraises de la technique actuelle ont un diamètre relativement faible pour réduire le gradient de vitesse de coupe entre le centre de la fraise et sa périphérie externe.

L'invention propose une solution simple, efficace et économique à l'ensemble des problèmes de la technique antérieure.

Elle a pour objet une fraise dont le dimensionnement et la géométrie sont particulièrement adaptés pour réduire les efforts de coupe et pour supporter les contraintes mécaniques et thermiques lors de l'usinage par surfaçage et détourage de pièces en matériau composite.

L'invention propose à cet effet une fraise de surfaçage et de détourage, en particulier pour l'usinage à grande vitesse de pièces en matériau composite, comprenant un corps dont au moins une partie est réalisée en céramique, ce corps s'étendant le long de l'axe de rotation de la fraise et comprenant une partie d'extrémité taillée comportant des dents régulièrement réparties autour de l'axe de la fraise et séparées les unes des autres par des poches à copeaux, chaque dent comprenant une arête principale de coupe frontale et une arête secondaire de coupe latérale, l'arête principale de coupe étant formée par une intersection entre une face de coupe principale et une première face de dépouille principale, et l'arête secondaire de coupe étant formée par une intersection entre une face de coupe secondaire et une première face de dépouille secondaire, l'arête principale de coupe de chaque dent étant raccordée à l'arête secondaire de coupe de la dent par un bec, ce bec ayant une forme arrondie convexe dont le rayon de courbure est supérieur à 1,5mm environ, caractérisée en ce que l'angle de coupe secondaire entre la face de coupe secondaire de chaque dent et un premier plan de référence passant par l'axe de rotation de la fraise et par un point considéré de l'arête secondaire de coupe de la dent, est compris entre 5 et 15° environ, cet angle de coupe étant mesuré dans un premier plan de travail perpendiculaire à l'axe de rotation de la fraise et passant par le point considéré de l'arête secondaire de coupe de la dent, et en ce que les poches à copeaux sont formées par des goujures frontales entre les dents, le fond de chacune de ces goujures étant raccordé à une face de coupe principale d'une dent par une ligne qui forme un angle compris entre 15 et 25° environ avec un plan de travail perpendiculaire à l'axe de la fraise, cet angle étant mesuré dans un plan de référence passant par l'axe de la fraise.

Le corps de la fraise selon l'invention peut être formé d'un bloc de matière en céramique ou bien d'une partie en carbure à une extrémité de laquelle est fixée par exemple par brasage une plaquette en céramique. Dans ce dernier cas, la partie taillée de la fraise s'étend sur toute l'épaisseur de la plaquette et peut également s'étendre sur une partie de la longueur du corps en carbure. Cette fraise comporte par exemple six dents régulièrement réparties autour de l'axe de la fraise et séparées les unes des autres par des poches à copeaux.

Selon l'invention, le bec de raccordement entre l'arête principale de coupe et l'arête secondaire de coupe de chaque dent a un rayon de courbure relativement important qui est supérieur à 1,5mm, et est par exemple de 2 mm environ. L'angle de coupe secondaire de chaque dent est de plus positif et compris entre 5 et 15° environ.

L'angle de coupe principal de chaque dent peut être positif et compris entre 5 et 15° environ. Les angles de coupe principal et secondaire sont par exemple de 10°.

Grâce à la combinaison des caractéristiques géométriques et dimensionnelles de la fraise selon l'invention, les efforts de coupe qui transitent entre les dents et la pièce en cours d'usinage sont relativement faibles, et cette fraise supporte donc sans se détériorer les contraintes thermiques et mécaniques (en torsion et compression) générées lors d'une opération d'usinage. Cette fraise est particulièrement adaptée pour l'usinage à grande vitesse d'un carter de soufflante du type précité, ce qui permet de réduire le temps d'usinage de ce carter d'un facteur 10 par rapport à l'utilisation d'une fraise en carbure selon la technique antérieure.

La fraise selon l'invention permet d'usiner des pièces en matériau composite, par exemple à base de fibres de carbone noyées dans une matrice en résine époxy. Cette fraise permet d'usiner à des vitesses de coupe relativement importantes ce type de matériau, et à des profondeurs de passe qui sont déterminées pour ne pas délaminer le matériau composite en cours d'usinage. Il n'est pas ailleurs pas nécessaire d'utiliser un lubrifiant avec la fraise selon l'invention.

De plus, selon l'invention, les poches à copeaux sont formées par des goujures frontales entre les dents, le fond de chacune de ces goujures étant raccordé à une face de coupe principale d'une dent par une ligne qui forme un angle compris entre 15 et 25° environ avec un plan de travail perpendiculaire à l'axe de la fraise, cet angle étant mesuré dans un plan de référence passant par l'axe de la fraise. Les poches à copeaux de la fraise ont alors un volume relativement faible qui est cependant suffisant pour le stockage momentané et l'évacuation des copeaux car ces derniers se présentent essentiellement sous forme de poudres ou de fines particules.

Dans un exemple particulier de réalisation de l'invention, la fraise a un diamètre externe supérieur à 15mm, et par exemple de 18 mm environ, et son âme a un diamètre supérieur à 10mm, et par exemple de 15mm environ.

Selon une autre caractéristique de l'invention, l'arête principale de coupe de chaque dent est rectiligne et s'étend sensiblement parallèlement à un plan de travail perpendiculaire à l'axe de rotation de la fraise.

L'arête principale de coupe de chaque dent a donc une orientation sensiblement horizontale qui confère à cette dent une fonction de raclement ou d'écrasement de la surface correspondante en cours d'usinage de la pièce, et permet d'améliorer l'état de surface de cette pièce après usinage.

L'arête secondaire de coupe de chaque dent s'étend préférentiellement de façon hélicoïdale autour de l'axe de la fraise et définit un angle d'hélice compris entre 1 et 40°, et par exemple de 20° environ.

La fraise comprend avantageusement deux dents diamétralement opposées comportant des arêtes principales de coupe longues qui sont raccordées l'une à l'autre à leurs extrémités radialement internes par au moins une arête centrale.

Les autres dents de la fraise peuvent comporter des arêtes principales de coupe courtes dont les extrémités radialement internes sont séparées de l'arête centrale par des piquages formés à proximité de cette arête centrale.

Selon encore d'autres caractéristiques avantageuses de la fraise selon l'invention :
- une seconde face de dépouille principale s'étend en arrière de la première face de dépouille principale et une seconde face de dépouille secondaire s'étend en arrière de la première face de dépouille secondaire ;
- la première face de dépouille principale de chaque dent a une épaisseur comprise entre 0,5 et 1 mm environ ;
- l'épaisseur cumulée de la première et de la seconde face de dépouille secondaire de chaque dent est supérieure à 2mm environ ; et
- la partie taillée de la fraise a une forme sensiblement cylindrique.

L'invention propose également un procédé d'usinage à grande vitesse d'une pièce, en particulier en matériau composite, au moyen d'une fraise telle que décrite ci-dessus, caractérisé en ce que la vitesse de coupe périphérique de la fraise est comprise entre 500 et 1000m/min, et l'avance par tour est comprise entre 0,03 et 0,12mm. La profondeur de passe de cette fraise peut être comprise entre 0,2 et 1,5mm environ.

Ces plages de valeurs déterminent les conditions optimales dans lesquelles il est conseillé d'utiliser la fraise selon l'invention sans risque d'usure accélérée ou de casse de la fraise.

L'invention sera mieux comprise et d'autres détails, caractéristiques et avantages de la présente invention, apparaîtront plus clairement à la lecture de la description qui suit faite à titre d'exemple non limitatif et en référence aux dessins annexés, dans lesquels :
- la figure 1 est une vue schématique de côté d'une fraise de surfaçage et de détourage selon l'invention ;
- la figure 2 est une vue schématique en coupe selon la ligne II-II de la figure 1, à plus grande échelle ;
- la figure 3 est une vue schématique de dessous de la fraise de la figure 1, à plus grande échelle ;
- la figure 4 est une vue à plus grande échelle du détail I₄ de la figure 3 ;
- la figure 5 est une vue agrandie de la partie active de la fraise de la figure 1 ;
- la figure 6 est une vue très schématique représentant une opération d'usinage d'une pièce par détourage ;
- La figure 7 est une vue très schématique représentant une opération d'usinage d'une pièce par surfaçage.

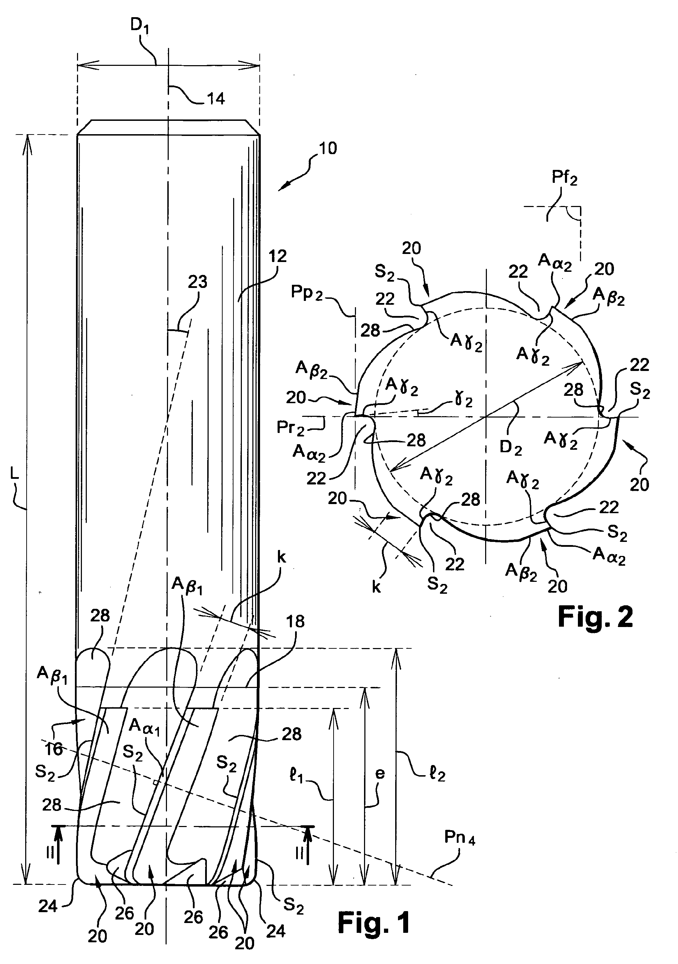

Les figures 1 à 5 représentent un mode de réalisation d'une fraise 10 selon l'invention pour l'usinage par surfaçage et détourage de pièces en matériau composite, en particulier pour turbomachine d'avion.

Cette fraise 10 comporte un corps 12 en carbure de forme allongée s'étendant le long de l'axe 14 de rotation de la fraise et à une extrémité duquel est fixée par brasage une plaquette 16 en céramique comportant la partie active de la fraise. L'autre extrémité du corps 12 de la fraise est destinée à être fixée par des moyens appropriés sur le mandrin d'une machine-outil.

Le corps 12 de la fraise peut être réalisé en carbure de tungstène et sa plaquette 16 peut être réalisée en céramique à base d'alumine renforcée par des fibres en carbure de silicium, à base de zircone, de nitrure de silicium, etc., ou de combinaisons de ces matériaux.

Le joint de brasure 18 entre le corps 12 et la plaquette 16 s'étend dans un plan perpendiculaire à l'axe 14 de rotation de la fraise.

La partie d'extrémité de la fraise située du côté de la plaquette 16 en céramique est taillée pour définir des dents 20 de coupe.

La partie taillée s'étend sur une longueur l₂ ou dimension le long de l'axe 12 de la fraise qui est en général supérieure à l'épaisseur e ou dimension axiale de la plaquette 16 en céramique.

La longueur l₁ de la partie active ou utile de la fraise, c'est-à-dire la partie travaillante de la fraise destinée à venir usiner une pièce lors d'une opération de fraisage, est au plus égale à l'épaisseur e de la plaquette 16, c'est-à-dire que seule la plaquette en céramique est destinée à venir au contact de la matière à usiner. Cette plaquette 16 en céramique présente en effet une grande dureté, une grande résistance thermique, et permet d'usiner à grande vitesse.

Dans le cas particulier représenté, la fraise 10 a une forme générale cylindrique et a un diamètre externe D₁ supérieur à 15mm, et par exemple de 18 mm, et une longueur L totale de l'ordre de 80mm environ. La partie taillée a une longueur l₂ de 24 mm environ, l'épaisseur e de la plaquette 16 est de l'ordre de 20mm environ, et la partie utile de la fraise a une longueur l₁ de 18 mm environ. L'âme de la fraise a un diamètre D₂ de l'ordre de 15mm environ.

La fraise 10 comprend six dents 20 qui sont régulièrement réparties autour de l'axe 14 de la fraise et qui sont séparées les unes des autres par des poches à copeaux 22.

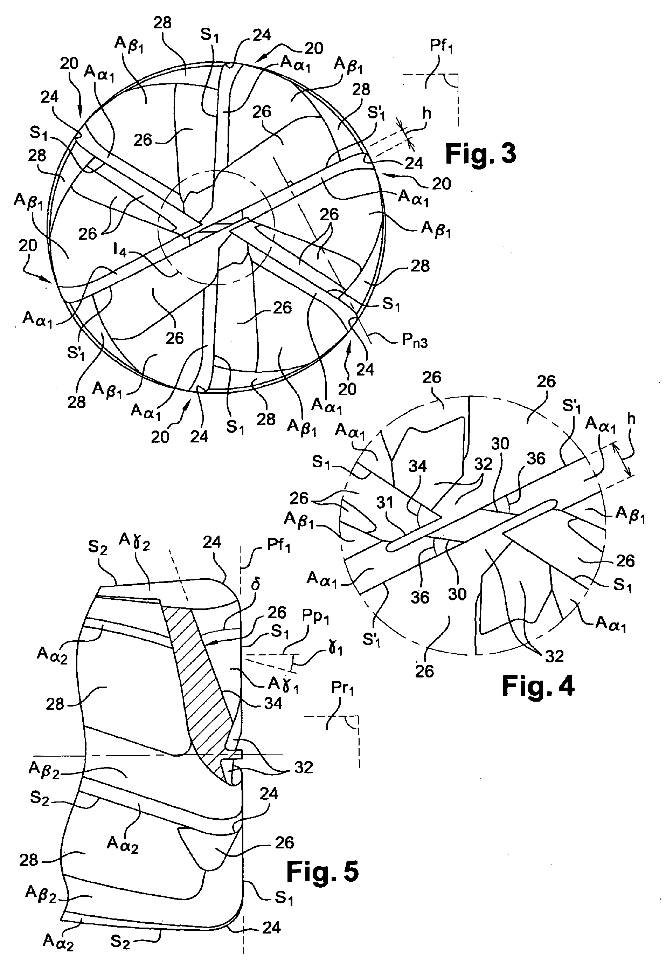

Chaque dent 20 comprend une arête principale de coupe S₁, S₁' sensiblement radiale (figure 3) et une arête secondaire de coupe S₂ qui s'étend de façon sensiblement hélicoïdale autour de l'axe 14 de la fraise (figure 1). L'angle d'hélice 23 est compris entre 1 et 40°, de préférence entre 10 et 30°, et est par exemple de 20° environ.

L'arête principale de coupe S₁, S₁' de chaque dent est raccordée à l'arête secondaire de coupe S₂ de la dent par un bec 24 de forme arrondie convexe vers l'extérieur dont le rayon de courbure est supérieur à 1,5mm environ, et est par exemple de 2 mm (figure 5).

L'arête principale de coupe S₁, S₁' de chaque dent est formée par une intersection entre une face de coupe principale A_{γ1} (figure 5) et une première face de dépouille principale A_{α1} (figure 3). La première face de dépouille principale A_{α1} se prolonge vers l'arrière de la dent par une seconde face de dépouille principale Aβ₁.

L'arête secondaire de coupe S₂ de chaque dent est formée par une intersection entre une face de coupe secondaire A_{γ2} (figure 2) et une première face de dépouille secondaire A_{α2} (figures 2 et 5). La première face de dépouille secondaire A_{α2} peut se prolonger vers l'arrière par une seconde face de dépouille secondaire A_{β2} (figure 5).

La face de coupe principale A_{γ1} de chaque dent est raccordée à son extrémité radialement externe à la face de coupe secondaire A_{γ2} de la dent (figure 5). Ces faces de coupe A_{γ1}, A_{γ2} sont respectivement formées par des goujures frontale 26 et latérale 28, qui délimitent les poches à copeaux 22 (figures 1, 3 et 5).

Deux arêtes principales de coupe S₁' dites longues diamétralement opposées sont raccordées entre elles à leurs extrémités radialement internes, situées au niveau de l'axe 14, par au moins une arête centrale 30

(figure 4). Ces arêtes principales de coupe S₁' sont portées par des dents 20 dites longues.

Les quatre autres dents 20 sont dites courtes et les extrémités radialement internes de leurs arêtes principales de coupe S₁ sont chacune reliées à une arête centrale 31, ces arêtes centrales 31 étant à distance les unes des autres. Ceci est obtenu par des piquages 32 situés à proximité de l'axe 14 de la fraise, de part et d'autre des arêtes principales de coupe S₁' longues (figures 4 et 5).

Dans les dessins, on définit les plans suivants :
- Pᵣ : plan de référence de la fraise passant par un point de l'arête principale de coupe S₁, S₁' ou de l'arête secondaire de coupe S₂ d'une dent 20, et par l'axe 14 de rotation de la fraise ;
- P_{f} : plan de travail de la fraise passant par un point considéré de l'arête principale de coupe S₁, S₁' ou de l'arête secondaire de coupe S₂ d'une dent 20 et perpendiculaire à l'axe 14 de la fraise et au plan de référence passant par le point considéré de l'arête ;
- Pₚ : plan vers l'arrière de la fraise de la fraise passant par un point considéré de l'arête principale de coupe S₁, S₁' ou de l'arête secondaire de coupe S₂ d'une dent 20 et perpendiculaire aux plans de référence et de travail passant par le point considéré de l'arête ;
- Pₙ : plan normal à l'arête, perpendiculaire à l'arête principale de coupe S₁, S₁' ou à l'arête secondaire de coupe S₂ d'une dent, à un point considéré de cette arête ;
- Pₛ : plan d'arête de la fraise, tangent à l'arête principale de coupe S₁, S₁, ou à l'arête secondaire de coupe S₂ d'une dent, à un point considéré de cette arête et perpendiculaire au plan de référence passant par le point considéré de cette arête.

Ces plans permettent de définir et de mesurer différents angles et dimensions de la fraise selon l'invention.

L'angle de coupe secondaire γ₂ entre la face de coupe secondaire A_{γ2} de chaque dent et un premier plan de référence Pᵣ₁ passant par un point de l'arête secondaire de coupe S₂ de la dent, est compris entre 5 et 15°, de préférence entre 8 et 12° et est par exemple de 10° environ. Cet angle _{γ2} est mesuré dans le plan de travail P_{f1} passant par le point considéré de l'arête S₂. Le plan de travail P_{f1} représenté en figure 2 correspond au plan de coupe II-II de la figure 1.

L'angle de coupe principal γ₁ entre la face de coupe principale A_{γ1} de chaque dent et un plan de référence Pᵣ₁ passant par un point de l'arête principale de coupe S₁, S₁' de la dent, est compris entre 5 et 15°, de préférence entre 8 et 12°, et par exemple de 10° environ. Cet angle γ₁ est mesuré dans un plan vers l'arrière Pₚ₁ passant par le point considéré de l'arête (figure 5).

Les arêtes principales de coupe S₁, S₁' des dents s'étendent sensiblement parallèlement à un plan de travail passant par ces arêtes. Dans la figure 5, les arêtes S₁, S₁' s'étendent dans le plan P_{f1}.

La première face de dépouille principale A_{α1} de chaque dent a une épaisseur h ou dimension transversale qui est comprise entre 0,5 et 1 mm environ (figures 3 et 4). Cette épaisseur h est égale à la longueur de la ligne d'intersection entre la première face de dépouille principale A_{α1} et un plan normal à l'arête Pₙ₃ passant par un point de l'arête principale de coupe S₁, S₁' correspondante, mesurée dans un plan tangent à la première face de dépouille principale A_{α1} et passant par le point considéré de l'arête (figure 3). Cette épaisseur h peut varier radialement de l'intérieur vers l'extérieur entre 0,5 et 0,7 mm environ, en particulier à cause des piquages 32 précités (figures 3 et 4).

Les première et seconde faces de dépouille secondaires A_{α2} et A_{β2} de chaque dent ont une épaisseur cumulée k, ou dimension transversale qui est comprise entre 1 et 4 mm, et de préférence entre 2 et 3 mm environ. Cette épaisseur k est égale à la somme des longueurs des lignes d'intersection entre les première et seconde faces de dépouille secondaires A_{α2}, A_{β2} et un plan normal à l'arête Pₙ₄ (figures 1 et 2) passant par un point considéré de l'arête secondaire de coupe S₂ correspondante de la dent. Ces longueurs sont mesurées respectivement dans des plans tangents aux première et seconde faces de dépouille A_{α2}, A_{β2}.

La ligne d'intersection 34 entre le fond de la goujure frontale 26 et la face de coupe principale A_{γ1} correspondante de chaque dent forme un angle δ compris entre 15 et 25°, de préférence entre 18 et 22°, et par exemple de 20° environ, avec un plan de travail P_{f1} passant par un point de l'arête principale de coupe S₁, S₁' de la dent. Cet angle δ est mesuré dans un plan de référence Pᵣ₁ passant par le point considéré de l'arête S₁, S₁' (figure 5).

L'angle de dépouille α₁ (non représenté) entre la première face de dépouille principale A_{α1} de chaque dent et un plan d'arête Pₛ₃ (non représenté) passant par un point considéré de l'arête principale de coupe S₁, S₁' de la dent, est positif et compris entre 2 et 8°, et de préférence entre 4 et 6°. Cet angle est mesuré dans un plan radial Pₙ₃ au point considéré de l'arête (figure 3).

L'angle de dépouille α₂ (non représenté) entre la première face de dépouille secondaire A_{α2} de chaque dent et un plan d'arête Pₛ₄ (non représenté) passant par un point considéré de l'arête secondaire de coupe S₂ de la dent est positif et compris entre 2 et 8° et de préférence entre 4 et 6°. Cet angle α₂ est mesuré dans un plan normal Pₙ₄ au point considéré de l'arête (figure 1).

Les angles de dépouille β₁, β₂ (non représentés) entre les secondes faces de dépouille primaire et secondaire A_{β1}, A_{β2} et les plans d'arête P_{S3}, P_{S4} précités sont positifs. Ces angles sont mesurés dans des plans normaux Pₙ₃, Pₙ₄ aux points considérés des arêtes.

L'angle 34 entre l'arête principale de coupe S₁ de chaque dent courte et l'arête principale 31 correspondante est par exemple de l'ordre de 60° environ. L'angle 36 entre l'arête principale de coupe S₁' de chaque dent longue et l'arête centrale 30 correspondante est par exemple de l'ordre de 65° environ. Ces deux angles peuvent être mesurés dans un plan de travail P_{f1} passant par le point d'intersection entre les arêtes S₁ et 31 et les arêtes S₁' et 30, respectivement (figures 1 et 2).

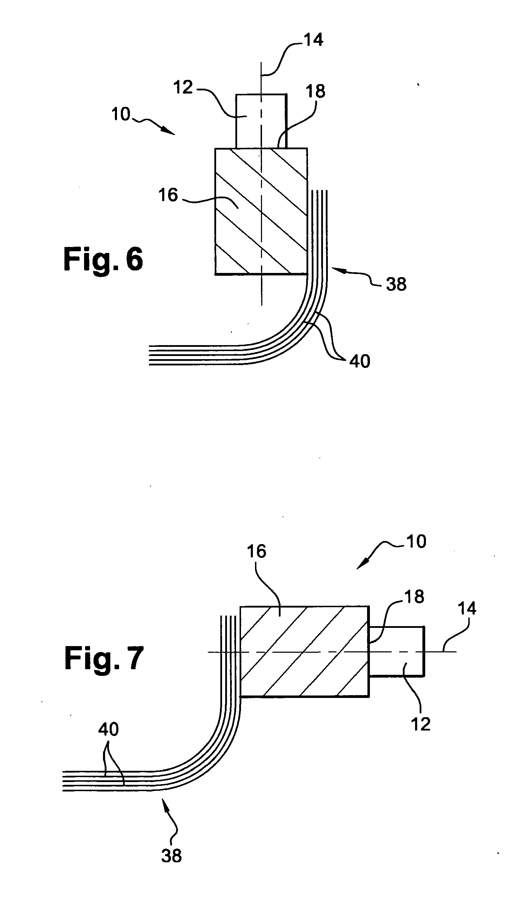

La fraise 10 représentée dans les dessins permet d'usiner à grande vitesse des pièces en matériau composite, par surfaçage et détourage. La figure 6 représente une étape d'usinage par détourage lors de laquelle la fraise est en contact avec la pièce 38 à usiner par l'intermédiaire des arêtes de coupe secondaire S₂ de ses dents, c'est-à-dire par la partie latérale de la fraise. La pièce 38 à usiner représentée partiellement dans ce dessin est une bride annulaire de fixation d'un carter de soufflante d'une turbomachine. Ce carter est par exemple formé d'une matrice en résine époxy dans laquelle sont noyées des nappes 40 de fibres de carbone.

La figure 7 représente une étape de surfaçage de cette bride dans laquelle la fraise est en contact par sa partie frontale, c'est-à-dire par les arêtes principales de coupe S₁, S₁' de ses dents, sur une surface à usiner de la bride.

Les caractéristiques dimensionnelles et géométriques de la fraise selon l'invention sont particulièrement adaptées pour éviter le délaminage du matériau de la pièce lors de son usinage.

Dans le cas particulier représenté dans les figures 1 à 5, la vitesse de coupe périphérique optimale de la fraise est comprise entre 500 et 1000m/min, l'avance par tour est comprise entre 0,03 et 0,12mm (avance par dent de 0,005 à 0,02mm) et la profondeur de passe est comprise entre 0,2 et 1,5mm environ.

L'énergie spécifique de coupe lors de l'usinage d'une pièce en matériau composite est de l'ordre de 20 à 40W/cm³/min. Lors de l'usinage, la température générée dans la pièce et dans la fraise ne dépasse en général pas 200° C.

## Revendications

1. Fraise de surfaçage et de détourage, en particulier pour l'usinage à grande vitesse de pièces en matériau composite, comprenant un corps (12) dont au moins une partie (16) est réalisée en céramique, ce corps s'étendant le long de l'axe (14) de rotation de la fraise et comprenant une partie d'extrémité taillée comportant des dents (20) régulièrement réparties autour de l'axe de la fraise et séparées les unes des autres par des poches à copeaux (22), chaque dent comprenant une arête principale de coupe (S₁, S₁') frontale et une arête secondaire de coupe (S₂) latérale, l'arête principale de coupe (S₁, S₁') étant formée par une intersection entre une face de coupe principale (A_{γ1}) et une première face de dépouille principale (A_{α1}) et l'arête secondaire de coupe (S₂) étant formée par une intersection entre une face de coupe secondaire (A_{γ2}) et une première face de dépouille secondaire (A_{α2}), l'arête principale de coupe (S₁, S₁') de chaque dent étant raccordée à l'arête secondaire de coupe (S₂) de la dent par un bec, ce bec ayant une forme arrondie convexe dont le rayon de courbure est supérieur à 1,5mm environ, l'angle de coupe secondaire (γ₂) entre la face de coupe secondaire (A_{γ2}) de chaque dent et un premier plan de référence (Pᵣ₂) passant par l'axe de rotation de la fraise et par un point considéré de l'arête secondaire de coupe (S₂) de la dent, étant compris entre 5 et 15° environ, cet angle de coupe (γ₂) étant mesuré dans un premier plan de travail (P_{f2}) perpendiculaire à l'axe de rotation de la fraise et passant par le point considéré de l'arête secondaire de coupe de la dent, **caractérisée en ce que** les poches à copeaux (22) sont formées par des goujures frontales (26) entre les dents, le fond de chacune de ces goujures étant raccordé à une face de coupe principale (A_{γ1}) d'une dent par une ligne (34) qui forme un angle (δ) compris entre 15 et 25° environ avec un plan de travail (P_{f1}) perpendiculaire à l'axe de la fraise, cet angle étant mesuré dans un plan de référence (Pᵣ₁) passant par l'axe de la fraise.

2. Fraise selon la revendication 1, **caractérisée en ce que** l'angle de coupe principal (γ₁) entre la face de coupe principale (A_{γ1}) de chaque dent et un second plan de référence (Pᵣ₁) passant par l'axe de rotation de la fraise et par un point considéré de l'arête principale de coupe (S₂) de la dent, est compris entre 5 et 15° environ, cet angle de coupe (_{γ1}) étant mesuré dans un plan vers l'arrière (Pₚ₁) perpendiculaire au second plan de référence (Pᵣ₁) et à un second plan de travail (P_{f1}) perpendiculaire à l'axe de rotation de la fraise et passant par le point considéré de l'arête principale de coupe (S₂) de la dent.

3. Fraise selon la revendication 1 ou 2, **caractérisée en ce que** l'angle de coupe principal (_{γ1}) est de 10° environ, et/ou l'angle de coupe secondaire (γ₂) est de 10° environ.

4. Fraise selon l'une des revendications précédentes, **caractérisée en ce que** le rayon de courbure du bec est supérieur ou égal à 2 mm environ.

5. Fraise selon l'une des revendications précédentes, **caractérisée en ce qu'**elle comprend six dents (20).

6. Fraise selon l'une des revendications précédentes, **caractérisée en ce qu'**elle a un diamètre externe (D₁) supérieur à 15mm, par exemple de 18 mm environ et **en ce que** l'âme de la fraise a un diamètre (D₂) supérieur à 10mm, par exemple de 15mm environ.

7. Fraise selon l'une des revendications précédentes, **caractérisée en ce** l'arête principale de coupe (S₁) de chaque dent est rectiligne et s'étend sensiblement parallèlement à un plan de travail (P_{f1}) perpendiculaire à l'axe de la fraise.

8. Fraise selon l'une des revendications précédentes, **caractérisée en ce que** l'arête secondaire de coupe (S₂) de chaque dent s'étend de façon hélicoïdale autour de l'axe de la fraise et définit un angle d'hélice compris entre 1 et 40°, et par exemple de 20° environ.

9. Fraise selon l'une des revendications précédentes, **caractérisée en ce qu'**une seconde face de dépouille principale (A_{β1}) s'étend en arrière de la première face de dépouille principale (A_{α1}), et une seconde face de dépouille secondaire (A_{β2}) s'étend à l'arrière de la première face de dépouille secondaire (A_{α2}).

10. Fraise selon l'une des revendications précédentes, **caractérisée en ce que** la première face de dépouille principale (A_{α1}) de chaque dent a une épaisseur (h) comprise entre 0,5 et 1 mm environ.

11. Fraise selon l'une des revendications précédentes, **caractérisée en ce que** l'épaisseur cumulée (k) de la première et de la seconde faces de dépouille secondaires (A_{α2}, A_{α2}) de chaque dent est supérieure à 2 mm environ.

12. Fraise selon l'une des revendications précédentes, **caractérisé en ce que** deux dents diamétralement opposées comportent des arêtes principales de coupe (S₁') longues qui sont raccordées l'une à l'autre à leurs extrémités radialement internes par au moins une arête centrale (30).

13. Fraise selon la revendication 12, **caractérisée en ce que** les autres dents de la fraise comportent des arêtes principales de coupe (S₁) courtes dont les extrémités radialement internes sont séparées de l'arête centrale (30) par des piquages (32) formés à proximité de cette arête centrale.

14. Fraise selon l'une des revendications précédentes, **caractérisée en ce que** la partie taillée de la fraise a une forme sensiblement cylindrique.

15. Procédé d'usinage à grande vitesse d'une pièce, en particulier en matériau composite, au moyen d'une fraise selon l'une des revendications précédentes, **caractérisé en ce que** la vitesse de coupe périphérique de la fraise est comprise entre 500 et 1000m/min, et l'avance par tour est comprise entre 0,03 et 0,12mm.

## Claims

1. A surfacing and contouring cutter, in particular for high-speed machining of parts made of composite material, the cutter comprising a body (12) having at least a portion (16) that is made of ceramic, the body extending along the axis (14) of rotation of the cutter and comprising a cut end portion having teeth (20) regularly spaced around the axis of the cutter and separated from one another by swarf grooves (22), each tooth comprising a front main cutting edge (S₁, S₁') and a side secondary cutting edge (S₂), the main cutting edge (S₁, S₁') being formed by an intersection between a main cutting face (A_{γ1}) and a first main flank (A_{α1}), and the secondary cutting edge (S₂) being formed by an intersection between a secondary cutting face (A_{γ2}) and a first secondary flank (A_{α2}), the main cutting edge (S₁, S₁') of each tooth being connected to the secondary cutting edge (S₂) of the tooth via a corner, the corner being of convex rounded shape with a radius of curvature that is greater than about 1.5 mm, the secondary cutting angle (γ₂) between the secondary cutting face (A_{γ2}) of each tooth and a first reference plane (Pᵣ₂) containing the axis of rotation of the cutter and a point under consideration of the secondary cutting edge (S₂) of the tooth lying in the range about 5° to 15°, said cutting angle (γ₂)being measured in a first working plane (P_{f2}) perpendicular to the axis of rotation of the cutter and containing the point under consideration of the secondary cutting edge of the tooth, **characterized in that** the swarf grooves (22) are formed by front flutes (26) between the teeth, the bottom of each of these flutes being connected to a main cutting face (A_{γ1}) of the tooth by a line (34) that forms an angle (δ) lying in the range about 15° to 25° relative to a working plane (P_{f1}) perpendicular to the axis of the cutter, said angle being measured in a reference plane (Pᵣ₁) containing the axis of the cutter.

2. A cutter according to claim 1, **characterized in that** the main cutting angle (γ₁) between the main cutting face (Aγ₁) of each tooth and a second reference plane (Pᵣ₁) containing the axis of rotation of the cutter and a point under consideration of the main cutting edge (S₂) of the tooth lies in the range about 5° to 15°, said cutting angle (γ₁) being measured in a plane (Pₚ₁) towards the rear perpendicular to the second reference plane (Pᵣ₁) and to a second working plane (P_{f1}) perpendicular to the axis of rotation of the cutter and containing the point under consideration of the main cutting edge (S₂) of the tooth.

3. A cutter according to claim 1, **characterized in that** the main cutting angle (γ₁) is about 10°, and/or the secondary cutting angle (γ₂) is about 10°.

4. A cutter according to claim 1, **characterized in that** the radius of curvature of the corner is greater than or equal to about 2 mm.

5. A cutter according to claim 1, **characterized in that** it has six teeth (20).

6. A cutter according to claim 1, **characterized in that** it has an outside diameter (D₁) greater than 15 mm, e.g. of about 18 mm, and **in that** the core of the cutter has a diameter (D₂) greater than 10 mm, e.g. of about 15 mm.

7. A cutter according to claim 1, **characterized in that** the main cutting edge (S₁) of each tooth is rectilinear and extends substantially parallel to a working plane perpendicular to the axis of the cutter.

8. A cutter according to claim 1, **characterized in that** the secondary cutting edge of each tooth extends helically around the axis of the cutter and defines a helix angle lying in the range 1° to 40°, and for example equal to about 20°.

9. A cutter according to claim 1, **characterized in that** a second main flank (A_{β1}) extends rearwards from the first main flank (A_{α1}), and a second secondary flank (A_{β2}) extends behind the first secondary flank (A_{α2}).

10. A cutter according to claim 1, **characterized in that** the first main flank (A_{α1}) of each tooth has a thickness (h) lying in the range about 0.5 mm to 1 mm.

11. A cutter according to claim 1, **characterized in that** the cumulative thickness (k) of the first and second secondary flanks (A_{α2}, A_{β2}) of each tooth is greater than about 2 mm.

12. A cutter according to claim 1, **characterized in that** two diametrically-opposite teeth have long main cutting edges (S₁) that are connected to each other at their radially inner ends via at least one central edge (30).

13. A cutter according to claim 13, **characterized in that** the other teeth of the cutter have short main cutting edges (S₁) with radially inner ends that are spaced apart from the central edge (30) by recesses (32) formed close to said central edge.

14. A cutter according to claim 1, **characterized in that** the cut portion of the cutter is substantially cylindrical in shape.

15. A method of machining a part at high speed, in particular a part made of composite material, by means of a cutter according to claim 1, the method being **characterized in that** the peripheral cutting speed of the cutter lies in the range 500 m/min to 1000 m/min, and the advance per revolution lies in the range 0.03 mm to 0.12 mm.

## Patentansprüche

1. Fräse zum Plandrehen und Fräsen, insbesondere für die Hochgeschwindigkeitsbearbeitung von Werkstücken aus Verbundwerkstoff, welche einen Körper (12) aufweist, von dem zumindest ein Teil (16) aus Keramik ausgeführt ist, wobei sich dieser Körper entlang der Drehachse (14) der Fräse erstreckt und einen zugeschnittenen Endabschnitt mit Zähnen (20) aufweist, welche gleichmäßig um die Achse der Fraise verteilt angeordnet sind und durch Spantaschen (22) voneinander getrennt sind, wobei jeder Zahn eine frontseitige Hauptscbneidkante (S₁, S₁') und eine seitliche Nebenschneidkante (S₂) aufweist, wobei die Hauptschrteidkante (S₁, S₁') durch eine Verschneidung von einer Hauptsclmeidfläche (A_{γ1}) und einer ersten Hauptfreifläche (A_{α1}) gebildet wird und die Nebensclneidkante (S₂) durch eine Verschneidung von einer Nebenschneidifäche (A_{γ2}) und einer ersten Nebenfreifläche (A_{α2}) gebildet wird, wobei die Hauptschneidkante (S₁, S₁') jedes Zahns mit der Nebenschneidkante (S₂) des Zahns durch eine Ecke verbunden ist und diese Ecke eine abgerundete, konvexe Form hat, deren Krümmungsradius größer ist als ungefähr 1,5 mm, wobei der Nebenschneidwinkel (γ₂) zwischen der Nebenschneidfläche (Aγ₂) jedes Zahns und einer ersten Referenzebene (Pᵣ₂), die durch die Drehachse der Fräse und durch einen bestimmten Punkt der Nebenschneidkante (S₂) des Zahns verläuft, ca. zwischen 5 und 15 ° liegt, wobei dieser Schneidwinkel (γ₂) in einer ersten Arbeitsebene (P_{f2}) gemessen wird, die im rechten Winkel zur Drehachse der Fräse steht und durch den bestimmten Punkt der Nebelischncidkante des Zahns verläuft,
**dadurch gekennzeichnet,**
**dass** die Spantaschen (22) von frontseitigen Nuten (26) zwischen den Zähnen gebildet werden, wobei der Boden jeder dieser Nuten mit einer Hauptschneidfläche (Aγ₁) eines Zahnes durch eine Linie (34) verbunden ist, die mit einer im rechten Winkel zur Achse der Fräse stehenden Arbeitsebene (P_{f1}) einen Winkel (8) bildet, der in einer Referenzebene (Pᵣ₁) gemessen wird, die durch die Achse der Fräse verläuft.

2. Fräse nach Anspruch 1,
**dadurch gekennzeichnet,**
**dass** der Hauptschneidwinkel (γ₁ zwischen der Hauptschneidfläche (Aγ₁) jedes Zahns und einer zweiten Referenzebene (P_{rf}), die durch die Drehachse der Fräse und durch einen bestimmten Punkt der Hauptschneidkante (S₁) des Zahns verläuft, ca. zwischen 5 und 15° liegt, wobei dieser Schneidwinkel (γ₁) in einer Ebene nach hinten (Pₚ₁) gemessen wird, die im rechten Winkel zur zweiten Referenzebene (P_{rf}) und zu einer zweiten Arbeitsebene (P_{f1}) liegt, die im rechten Winkel zur Drehachse der Fräse steht und durch den bestimmten Punkt der Hauptschneidkante (S₁) des Zahns verläuft.

3. Fräse nach Anspruch 1 oder 2,
**dadurch gekennzeichnet,**
**dass** der Hauptschneidwinkel (γ₁) ca. 10° beträgt, und/der der Nebenschneidwinkel (γ₂) ca. 10° beträgt.

4. Fräse nach einem der vorherigen Ansprüche,
**dadurch gekennzeichnet,**
**dass** der Krümmungsradius der Ecke größer oder gleich ca. 2 mm ist.

5. Fräse nach einem der vorherigen Ansprüche,
**dadurch gekennzeichnet,**
**dass** sie sechs Zähne (20) aufweist.

6. Fräse nach einem der Ansprüche 1 bis 4,
**dadurch gekennzeichnet,**
**dass** sie einen Außendurchmesser (D₁) von mehr als 15 mm, zum Beispiel von 18 mm hat, und dass der Kern der Fräse einen Durchmesser (D₂) von mehr als 10 mm, zum Beispiel von 15 mm hat.

7. Fräse nach einem der vorherigen Ansprüche,
**dadurch gekennzeichnet,**
**dass** die Hauptschneidkante (S₁) jedes Zahns geradlinig ist und sich im Wesentlichen parallel zu einer Arbeitsebene (P_{f1}) erstreckt, die im rechten Winkel zur Achse der Fräse liegt.

8. Fräse nach einem der vorherigen Ansprüche,
**dadurch gekennzeichnet,**
**dass** sich die Nebenschneidkante (S₂) jedes Zahns wendelförmig um die Achse der Fräse erstreckt und einen Spiralwinkel bildet, der ungefähr zwischen 1 und 40° und beispielsweise 20° beträgt.

9. Fräse nach einem der vorherigen Ansprüche,
**dadurch gekennzeichnet,**
**dass** sich eine zweite Hauptfreifläche (A_{β1}) hinter der ersten Hauptfreifläche (A_{α1}) erstreckt, und sich eine zweite Nebenfreifläche (A_{β2}) hinter der ersten Nebenfreifläche (A_{α2}) erstreckt.

10. Fräse nach einem der vorherigen Ansprüche,
**dadurch gekennzeichnet,**
**dass** die erste Hauptfreifläche (A_{α1}) jedes Zahns eine Stärke (h) von ca. 0,5 bis 1 mm hat.

11. Fräse nach einem der vorherigen Ansprüche,
**dadurch gekennzeichnet,**
**dass** die summierte Stärke (k) der ersten und der zweiten Nebenfreifläche (A_{α2}, A_{β2}) jedes Zahns über ungefähr 2mm beträgt.

12. Fräse nach einem der vorherigen Ansprüche,
**dadurch gekennzeichnet,**
**dass** zwei einander diametral gegenüber liegende Zähne lange Hauptschneidkanten (S₁') aufweisen, die an ihren radial inneren Enden durch mindestens eine zentrale Kante (30) miteinander verbunden sind.

13. Fräse nach Anspruch 12,
**dadurch gekennzeichnet,**
**dass** die anderen Zähne der Fräse kurze Hauptschneidkanten (S₁) aufweisen, deren radial innere Enden von der zentralen Kante (30) durch Austiefungen (32) getrennt sind, die in der Nähe dieser zentralen Kante gebildet sind.

14. Fräse nach einem der vorherigen Ansprüche,
**dadurch gekennzeichnet,**
**dass** der zugeschnittene Abschnitt der Fräse eine im Wesentlichen zylindrische form hat.

15. Verfahren zur Hochgeschwindigkeitsbearbeitung eines Werkstücks, insbesondere aus Verbundwerkstoff, mittels einer Fräse nach einem der vorherigen Ansprüche,
**dadurch gekennzeichnet,**
**dass** die Umfangsschnittgeschwindigkeit der Fräse zwischen 500 und 1000 m/min beträgt, und das Vorrücken pro Umdrehung zwischen 0,03 und 0,12 man beträgt.
